# EUROPÄISCHE PATENTSCHRIFT

(11) **EP 3 377 785 B1**
(45) Veröffentlichungstag und Bekanntmachung des Hinweises auf die Patenterteilung: **08.04.2020**
(21) Anmeldenummer: 16795344.7
(22) Anmeldetag: 15.11.2016
(51) Int. Cl.: F16F 15/173, F16C 17/10, F16C 33/20, F16C 33/04

(54) **DREHSCHWINGUNGSDÄMPFER MIT LAGEREINRICHTUNG UND VERFAHREN ZUR HERSTELLUNG DER LAGEREINRICHTUNG**
TORSIONAL VIBRATION DAMPER HAVING A BEARING DEVICE AND METHOD FOR PRODUCING THE BEARING DEVICE
AMORTISSEUR DE VIBRATIONS DE TORSION COMPRENANT UN DISPOSITIF DE SUPPORT ET PROCÉDÉ DE FABRICATION DU DISPOSITIF DE SUPPORT

(30) Priorität: 18.11.2015 DE 102015119960
(43) Veröffentlichungstag der Anmeldung: 26.09.2018
(73) Patentinhaber: Hasse & Wrede GmbH, 12681 Berlin (DE)
(72) Erfinder: KNOPF, Florian, 14199 Berlin (DE)
(74) Vertreter: Specht, Peter
(86) Internationale Anmeldenummer: PCT/EP2016/077694
(87) Internationale Veröffentlichungsnummer: WO 2017/085048

(56) Entgegenhaltungen:
- DE-A1- 19 519 261
- DE-A1- 19 708 082
- JP-U- S5 555 645
- JP-U- S5 768 946

## Beschreibung

Die Erfindung betrifft einen Drehschwingungsdämpfer nach dem Oberbegriff des Anspruchs 1 und ein Verfahren zur Herstellung eines Lagerelementes für eine Lagereinrichtung für einen Drehschwingungsdämpfer.

Drehschwingungsdämpfer der gattungsgemäßen Art dienen an einer Maschinenwelle - häufig einer Motorkurbelwelle - zur Dämpfung von Drehschwingungen. An der Maschinenwelle wird das Dämpfergehäuse des Drehschwingungsdämpfers drehsteif mit einer Maschinenwelle - häufig einer Motorkurbelwelle - verbunden, deren Drehschwingungen gedämpft werden sollen. Das Dämpfergehäuse und der Schwungring folgen der mittleren Drehgeschwindigkeit der Maschinenwelle ohne Schlupf. Ihre Drehschwingungen hingegen, die sich der gleichmäßigen Drehung überlagern, übertragen sich zunächst nur auf das Dämpfergehäuse. Der Schwungring würde gleichförmig rotieren, wenn ihn nicht ein viskoses Fluid - beispielsweise ein Silikonöl - das den engen Scherspalt ausfüllt, an das Dämpfergehäuse ankoppeln würde. Diese Koppelung ist elastisch und dämpfungsbehaftet. Infolgedessen treten zwischen Dämpfergehäuse und Schwungring Relativ-Drehwinkel von z. B. bis zu ± 1 Winkelgrad im Takte der erregenden Wellenschwingung auf. Da sich der Schwungring also in der Dämpfergehäusekammer relativ zum Dämpfergehäuse etwas drehen kann, benötigt er zu seiner Lagerung in der Regel wenigstens eine Lagereinrichtung, die eines oder mehrere Lagerelemente aufweist.

Eine wesentliche Anforderung bei der Auslegung der Lagereinrichtung eines Drehschwingungsdämpfers ist, dass der in der Dämpferkammer befindliche Schwungring mit der Lagereinrichtung frei beweglich gelagert wird und dass eine Kollision mit der Dämpferkammer bzw. mit dem Dämpfergehäuse, welches die Dämpferkammer ausbildet, ausgeschlossen ist. Dies erfolgt durch die Festlegung geeigneter Nominalwerte und Toleranzen von Schwungring, Lagereinrichtung und Dämpferkammer. Häufig ist der Bauraum für den Drehschwingungsdämpfer an einem Motor bzw. einer Verbrennungskraftmaschine begrenzt. Gleichzeitig steigen aufgrund der Weiterentwicklung von Motoren bzw. Verbrennungskraftmaschinen die Anforderungen an die Funktion des Drehschwingungsdämpfers.

Als Lagereinrichtung haben sich insbesondere lose eingelegte Lagerelemente bewährt, die ein Gleitlager zwischen Schwungring und Dämpferkammer ausbilden. So ist es bekannt, einen an einer Stelle seines Umfangs geschlitzten Radialring mit zwei Axíalringen zu kombinieren - EP 0 423 243 - oder als Lagereinrichtung eine Vielzahl axialer Führungsplättchen als Lagerelemente vorzusehen - GB 1 307 607.

Aus der DE 195 19 261 A1 ist ein Drehschwingungsdämpfer mit einer Lagereinrichtung zur Führung eines Schwungringes in einem Dämpfergehäuse bekannt, bei der als Lagereinrichtung wenigstens ein im Querschnitt L-förmiges Lagerelement vorgesehen ist, das derart in das Dämpfergehäuse eingelegt ist, dass ein Radiallagerabschnitt des L-förmigen Lagerelements den Schwungring gegenüber dem Dämpfergehäuse in radialer Richtung lagert und führt und dass ein Axiallagerabschnitt des L-förmigen Lagerelements eine axiale Lagerung und Führung gewährleistet. Zwischen dem Schwungring und dem Dämpfergehäuse bestehen Scherspalte, die mit dem viskosen Fluid gefüllt sind. Nach Varianten dieser Schrift ist vorgesehen, dass zwei der L-förmigen Lagerelemente im inneren oder äußeren Umfangsspalt des Schwungrings angeordnet sind, oder dass eines der L-förmigen Lagerelemente mit einem Axialband kombiniert wird. Die L-förmigen Lagerelemente können als umfangsgeschlossener Winkelring ausgelegt sein oder an einer Stelle ihres Umfangs geschlitzt ausgebildet sein.

Aus der DE 101 26 477 C1 ist es bekannt, dass die L-förmigen Lagerelemente an einer Stelle des Umfangs eine Stoßfuge aufweisen, welche durch mindestens einen oder mehrere Materialstege überbrückt ist, so dass ein umfangsgeschlossener Ring gebildet wird. Vorzugweise sind diese Materialstege nach Art einer Sollbruchstelle so ausgestaltet, dass sie bei thermischer Längenzunahme der Buchse aufreißen oder sich elastischplastisch verformen. Nach einer weiteren Variante der DE 101 26 477 C1 ist die Stoßfuge durch einen oder zwei als Reißstege ausgebildete Materialstege überbrückt, der/die in der Flucht der Radiallagerpartie und/oder in der Flucht der Axiallagerpartie liegt/liegen. Ebenfalls bekannt ist, dass die Stoßfuge durch einen als Mäandersteg ausgebildeten Materialsteg überbrückt ist und dass der Materialsteg ein Filmsteg ist. Die vor der Montage noch umfangsgeschlossenen Ringe lassen sich nach den Angaben der DE 101 26 477 C1 leichter lagern als Ringe, die nicht umfangsgeschlossen sind, da sie sich nicht verhaken können. Zudem ermöglicht es die Sollbruchstelle, die Ringe bei geringfügig verschiedenen Lagersitzdurchmessern einzusetzen. Problematisch ist allerdings, dass für nicht nur geringfügig verschiedene Lagersitzdurchmesser doch verschiedene Lagerringe hergestellt werden müssen.

Aus der JP S 55 55645 U ist ein geschlitzter Lagerring mit einem L-förmigen Querschnitt als Lagerelement bekannt.

Aus der JP S 57 689 46 U, die als nächstliegender Stand der Technik betrachtet wird, ist ein Lagerring bekannt, der aus einem Band abgelängt ist. Dieser bedarf einer weiteren Optimierung.

Die Erfindung hat die Aufgabe, einen optimierten Drehschwingungsdämpfer zu schaffen.

Die Erfindung löst diese Aufgabe durch den Gegenstand des Anspruchs 1. Vorteilhafte Ausgestaltungen sind den Unteransprüchen zu entnehmen.

Die Länge des abgelängten Stückes, welches das Lagerelement bildet, entspricht dem Umfang des Lagersitzes des Dämpfergehäuses so, dass das Lagerelement einerseits an diesem Lagersitz gut montierbar ist und sich andererseits kein zu großer Spalt zwischen den Enden des Lagerelementes bildet, welcher die Lagerfunktion beeinträchtigen würde. "Nicht umfangsgeschlossen" bedeutet, dass die Enden des Lagerelementes nicht stoffschlüssig miteinander verbunden sind.

Herstellbar ist dieser Dämpfer mit einem Verfahren zur Herstellung eines Lagerelementes für eine Lagereinrichtung eines solchen Viskositäts-Drehschwingungsdämpfers, mit folgenden Schritten:
Schritt A): Bereitstellen eines Bandes, an dem zumindest eines oder beide der folgenden Merkmale vorhanden sind: einer oder mehrere Axiallagerabschnitte und einer oder mehrere Radiallagerabschnitte sowie vorzugsweise einer oder mehrere Stege, insbesondere Radialstege; welche ggf. - d.h. wenn vorhanden - die mehreren Axiallagerabschnitte und/oder Radiallagerabschnitte miteinander verbinden;
Schritt B): Ablängen des Lagerelementes aus dem bereitgestellten Band; und
Schritt C): Einlegen des abgelängten Lagerelements aus Schritt C) in ein bereitgestelltes offenes Dämpfergehäuse an einem Lagersitz des Dämpfergehäuses. Im Schritt C) wird das abgelängte Lagerelement - wenn es noch nicht den benötigten Radius aufweist, zudem in die Form eines nicht umfangsgeschlossenen Ringes gebogen. Der Schritt C kann auch umfassen, dass das Lagerelement gemeinsam mit einem Schwungring an den Lagersitz gelegt wird. Vorzugseise wird das Lagerelement aber vor dem Schwungring in das Dämpfergehäuse eingelegt.

Der Gegenstand des Anspruchs 1 bietet mehrere Vorteile.

Mit dem Bandmaterial bzw. Band lassen sich Lagerelemente für Lagersitze verschiedenen Durchmessers realisieren. Dies spart Werkzeugkosten, denn es müssen nicht mehr für verschiedene Lagersitzumfänge/-durchmesser verschiedene Werkzeuge zur Herstellung der ringförmigen Lagerelemente verschiedenen Umfangs bereitgestellt werden. Es wird einfach entsprechend dem jeweiligen Umfang das Lagerelement mit einer dem Umfang des Lagersitzes entsprechenden Länge aus dem bereitgestellten Band abgelängt. Die Logistik bei der Herstellung wird ebenfalls vereinfacht. Damit geht eine Einsparung an Lagerkosten einher. Zudem werden Prototypenbauzeit verkürzt und Montagefehler vermieden. Nach der Erfindung sind zudem an dem wenigstens einen Lagerelement mehrere Axiallagerabschnitte und mehrere Radiallagerabschnitte vorgesehen. Dies bringt eine Reihe von Vorteilen mit sich. Da sich die Axiallagerabschnitte und die Radiallagerabschnitte nicht mehr über den gesamten Umfang oder fast den gesamten Umfang des Lagerelementes erstrecken, sondern da lediglich umfangsverteilt drei oder mehr Axial- und/oder Radiallagerabschnitte vorgesehen sind, wird der Raum, welchen das jeweilige Lagerelement im Scherspalt ausfüllt, reduziert und es entsteht entsprechend zusätzlicher Raum, der von dem viskosen Medium ausgefüllt werden kann und in dem eine viskose Kopplung zwischen dem Schwungring und dem Dämpfergehäuse möglich ist. Dies ermöglicht es, den nutzbaren Scherspalt zu maximieren und die Anbindung zwischen dem Schwungring und dem Dämpfergehäuse zu optimieren. Als die Axiallagerabschnitte und/oder als die Radiallagerabschnitte werden solche Abschnitte bezeichnet, an welchen in axialer bzw. radialer Richtung im Betrieb fortlaufend eine Gleitlagerung zwischen dem Dämpfergehäuse und dem Schwungring durch diese Abschnitte realisierbar ist.

Es ist zudem vorteilhaft und zweckmäßig, in einfacher Weise aus einem einzigen Band mehrere der Lagerelemente eines Viskositäts-Drehschwingungsdämpfers abzulängen. Es können aber auch Bänder verschiedener Bauart bereitgestellt werden, wenn sich die Lagerelemente nicht alle aus dem gleichen Band ablängen lassen, z.B., da ihr Querschnitt verschieden ist.

Insbesondere dann, wenn ein bezogen auf den Schwungring axial außen liegendes Lagerelement realisiert werden soll, schmiegt sich das abgelängte Band aufgrund seiner Biegesteifigkeit beim Einsetzen in das Dämpfergehäuse nach außen hin an das äußere Dämpfergehäuse an, so dass sich der Schwungring in einem Schritt bei der Herstellung des Drehschwingungsdämpfers auf einfache Weise im Dämpfergehäuse platzieren lässt.

Nach einer vorteilhaften Variante ist das wenigstens eine nichtumfangsgeschlossene Lagerelement aus einem Band abgelängt, das als gerades Band bereitgestellt wird. Es ist aber auch vorteilhaft, wenn, dass das wenigstens eine Lagerelement aus einem gebogenen Band abgelängt ist, wobei die Biegung des Bandes vorzugsweise einen Radius aufweist, der größer ist als der des Lagersitzes. Dieses Band kann beispielsweise wie ein Endlosband auf einer Trommel bereitgestellt werden, deren Durchmesser vorzugsweise deutlich größer ist als der der zu realisierenden Lagerelemente.

Das Band kann aus Kunststoff bestehen und im vorzugsweise in einem Extrusionsverfahren kostengünstig bereitgestellt werden.

Es ist vorteilhaft, das Lagerelement vor dem Schwungring zu montieren. Es ist aber auch denkbar - wenn auch weniger bevorzugt - das Lagerelement an den Schwungring zu legen und diese vormontierte Einheit dann in das noch offene Dämpfergehäuse zu legen. Diese Variante kann gewählt werden, wenn das oder mehrere der Lagerelement(e) in inneren Eckbereichen eines Gehäuses zu montieren sind.

Sodann wird vorzugsweise - zur Vervollständigung der Herstellung des Drehschwingungsdämpfers an sich - das bereitgestellte offene Dämpfergehäuse in einem weiteren Schritt z.B. mit einem Deckel verschlossen, wobei noch eine Einfüllöffnung für das viskose Medium verbleibt. Danach wird das viskose Medium eingefüllt und die Einfüllöffnung des Dämpfergehäuses geschlossen. Derart wird auch ein vollständiges Verfahren zur Montage eines Drehschwingungsdämpfers aus bereitgestellten Elementen Dämpfergehäuse mit Deckel, Lagereinrichtung mit nach dem vorstehenden Verfahren hergestellten Lagerelementen, Schwungring und viskosem Medium realisiert.

Erfindungsgemäß sind wenigstens drei der Axiallagerabschnitte und/oder der Radiallagerabschnitte umfangsverteilt an dem einen oder den zwei oder mehr Lagerelementen vorgesehen.

Um die Bereiche, die zusätzlich von dem viskosen Medium ausgefüllt werden, groß zu gestalten, beträgt die aufsummierte Umfangslänge der Axial- und/oder Radiallagerabschnitte nach einer bevorzugten Ausführungsform weniger als 50%, insbesondere weniger als 40% und besonders bevorzugt weniger als 30% des Umfangs des gesamten Lagerelements.

Es ergänzen sich jeweils umfangsverteilt die Radiallagerabschnitte und die Axiallagerabschnitte zu im Querschnitt L-förmigen Lagerabschnitten, die umfangsverteilt am Lagerelement vorgesehen sind. Durch solche L-förmige Lagerabschnitte wird der Schwungring besonders gut zentriert und geführt. Die Montage gestaltet sich ferner bei dieser Ausgestaltung als sehr einfach, da das so gestaltete Lagerelement gut im Scherspalt platzierbar ist, bevor das in Regel zur Montage zunächst einseitig offene Dämpfergehäuse nach dem Einlegen der Lagerelemente und des Schwungrings geschlossen und an einer noch später zu schließenden Einfüllöffnung mit dem viskosen Fluid befüllt wird.

Zur Realisierung einer guten Lagerung ist es zweckmäßig, wenn zwei der Lagerelemente in der Dämpferkammer angeordnet sind. Es können zwar theoretisch auch mehrere der Lagerelemente vorgesehen sein. In der Regel genügen aber zwei Lagerelemente zur Lagerung des Schwungringes. Damit ist auch die Montage einfach.

Es ist vorteilhaft, wenn die Dämpferkammer einen im Wesentlichen rechteckigen Querschnitt mit inneren und äußeren Eckbereichen aufweist. Diese Eckbereiche bilden dann vorzugsweise und einfach die Lagersitze für die Lagerelemente. Dann können nach einer Variante zwei der Lagerelemente in den äußeren Eckbereichen der Dämpferkammer zwischen dem Dämpfergehäuse und dem Schwungring angeordnet sein. Diese Ausgestaltungsform lässt sich besonders leicht montieren. Diese Ausgestaltung ist vorteilhaft aber nicht zwingend. Es sind auch andere Querschnitte wie C-Formen und dgl. denkbar.

Alternativ können zwei der Lagerelemente in den inneren Eckbereichen der Dämpferkammer zwischen dem Dämpfergehäuse und dem Schwungring angeordnet sein.

Denkbar ist schließlich auch, dass eines der Lagerelemente in einem der äußeren Eckbereiche angeordnet ist und ein weiteres der Lagerelemente in einem der inneren Eckbereiche der Dämpferkammer zwischen dem Dämpfergehäuse und dem Schwungring angeordnet ist. Dabei wird bevorzugt, wenn die Lagerelemente in diagonal einander in der Dämpferkammer gegenüberliegenden Eckbereichen angeordnet sind, da dies den Schwungring gut zentriert.

Vorzugsweise sind die Lagerelemente der Lagereinrichtung ohne Vorspannung zwischen dem Dämpfergehäuse und dem Schwungring angeordnet, um eine gute Lagerung zu gewährleisten. Dies wird besonders bevorzugt, da derart eine gute Lagerung sichergestellt wird. Als Material für die Lagerelemente der Lagereinrichtung wird bevorzugt Kunststoff eingesetzt. Das viskose Fluid ist bevorzugt ein Silikonöl. Die Lagerelemente können aber auch im Einzelfall mit Vorspannung montiert werden.

Im Rahmen der Erfindung realisierbar ist auch eine Ausführung der Lagereinrichtung, bei welcher wenigstens eines der Lagerelemente lediglich einen Radiallagerabschnitt und nur diese verbindende Radialstege geringerer Banddicke aufweist. Diese Lagerelemente werden dann bevorzugt - nicht aber zwingend - mit Lagerelementen kombiniert, bei welchen sich jeweils umfangsverteilt die Radiallagerabschnitte und die Axiallagerabschnitte zu im Querschnitt L-förmigen Lagerabschnitten ergänzen. Dann führt eines der Lagerelemente den Ring vorzugsweise in radialer und axialer Richtung und das andere den Schwungring nur in einer dieser Richtungen.

Vorteilhafte Ausgestaltungen der Erfindung sind den übrigen Unteransprüchen zu entnehmen.

Nachfolgend wird die Erfindung unter Bezug auf die Zeichnungen anhand von Ausführungsbeispielen näher beschrieben. Es zeigen:
- Fig. 1: eine Schnittansicht durch eine Ringhälfte eines ersten ringförmigen Viskositäts-Drehschwingungsdämpfers;
- Fig. 2: in a) eine perspektivische Ansicht eines als nicht umfangsgeschlossener Ring ausgebildeten Lagerelements und in b) eine Detailansicht des Lagerelements aus Fig. 2a.
- Fig. 3: eine Schnittansicht durch eine Ringhälfte eines zweiten ringförmigen Viskositäts-Drehschwingungsdämpfers;
- Fig. 4: in a) eine perspektivische Ansicht eines weiteren als nicht umfangsgeschlossener Ring ausgebildeten Lagerelements und in b) eine Detailansicht des Lagerelements aus Fig. 4a.
- Fig. 5: eine Schnittansicht durch eine Ringhälfte eines dritten ringförmigen Viskositäts-Drehschwingungsdämpfers; und
- Fig. 6: ein Flussdiagramm, welches den Ablauf eines erfindungsgemäßen Herstellungsverfahrens veranschaulicht.

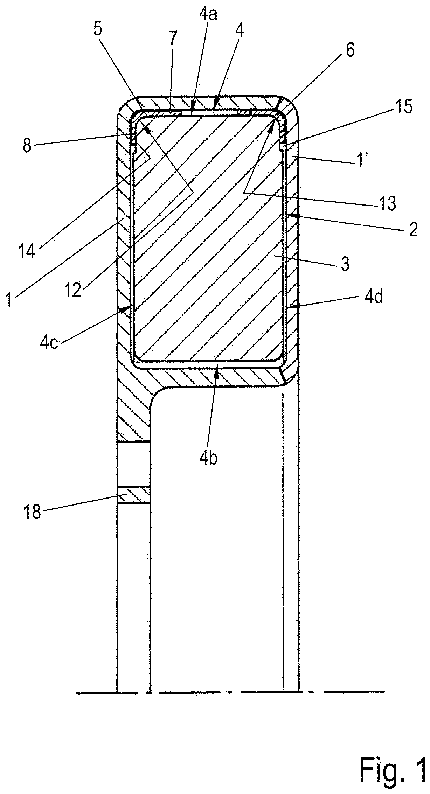

Fig. 1 zeigt einen Viskositäts-Drehschwingungsdämpfer mit einem ringförmigen Dämpfergehäuse 1, das eine Dämpferkammer 2 begrenzt und das einen Deckel 1' aufweist, der es verschließt.

Das Dämpfergehäuse 1 ist drehbar mit einer hier nicht dargestellten Maschinenwelle M - insbesondere einer Motorkurbelwelle - verbindbar, deren Drehschwingungen gedämpft werden sollen.

In die Dämpferkammer 2 ist ein umfangsgeschlossener Schwungring 3 eingesetzt. Dieser Schwungring 3 weist hier in bevorzugter - nicht aber zwingender - Ausgestaltung einen im Wesentlichen rechteckigen Querschnitt auf. Der Schwungring 3 wird durch eine Lagereinrichtung im Dämpfergehäuse 1 gelagert. Diese ist vorzugsweise lose - d.h. ohne Vorspannung - zwischen dem Schwungring 3 und der Innenwand des Dämpfergehäuses 1 angeordnet. Zwischen der Innenwand des Dämpfergehäuses 1 und dem Schwungring 3 ist in der Dämpferkammer 2 ein Scherspalt 4 ausgebildet, der mit einem viskosen Dämpfungsmedium, insbesondere einem viskosen Fluid, befüllt ist.

Die Lagereinrichtung weist Lagerelemente 5, 6 auf, die als an einer Stelle ihres Umfangs nicht umfangsgeschlossene Ringe ausgebildet sind. Die Lagerelemente 5, 6 dienen dazu, den Schwungring 3 im Dämpfergehäuse 1 relativ zum Dämpfergehäuse 1 drehbar zu lagern. Diese Lagerelemente 5, 6 bestehen vorzugsweise aus Kunststoff und bilden jeweils Gleitlager zwischen dem Lagergehäuse 1 und dem Schwungring 3 aus. Die Lagerelemente 5, 6 sind vorzugsweise einstückig, was die Handhabung besonders einfach macht oder aber in weiteren Ausführungen zwei- oder mehrstückig ausgebildet.

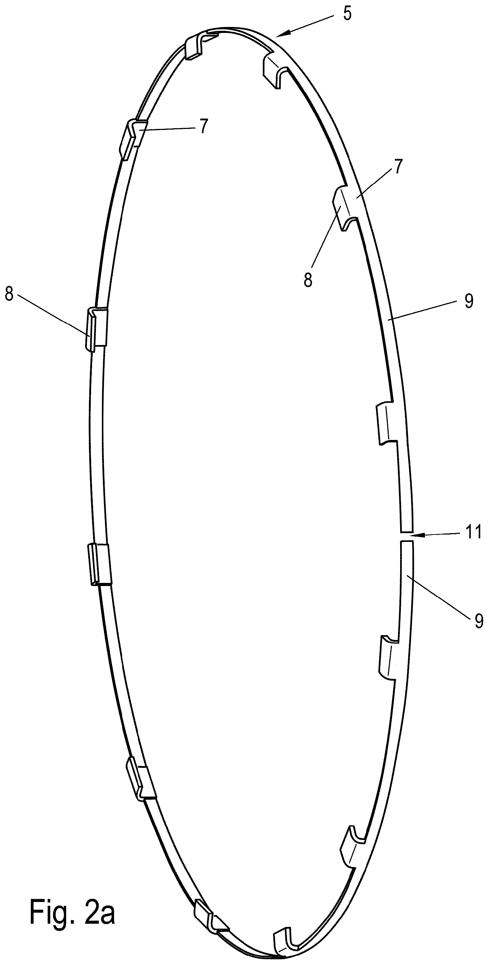

Fig. 2a zeigt das Lagerelement 5. Veranschaulicht ist der montierte Zustand, obwohl das Dämpfergehäuse 1 hier nicht dargestellt ist. Das andere Lagerelement 6 ist hier identisch wie das Lagerelement 5 ausgebildet, so dass die nachfolgende Beschreibung auch für das Lagerelement 6 zutrifft. Die identische Ausbildung der Lagerelemente 5, 6 hat den Vorteil, dass nur eine Bauart der Lagerelemente 5 für die Fertigung bereitgestellt werden muss. Es ist aber auch denkbar, die beiden Lagerelemente 5, 6 unterschiedlich zu gestalten, so dann, wenn der Schwungring 3 im Querschnitt nicht rechteckig ausgestaltet ist sondern beispielsweise gestuft, so dass eine Lagerung in axialer Richtung auf verschiedenen Durchmessern realisiert werden muss (hier nicht dargestellt).

Das Lagerelement 5 ist bis auf eine Stelle seines Umfangs ringförmig ausgebildet und weist umfangsverteilt wenigstens zwei oder mehr Axiallagerabschnitte 8 und/oder wenigstens zwei oder mehr Radiallagerabschnitte 7 auf. Nach Fig.1 sind die Axiallagerabschnitte 8 und die Radiallagerabschnitte 7 umfangsverteilt bevorzugt an korrespondierenden Winkelpositionen angeordnet, so dass - im Querschnitt der Fig. 1 - betrachtet umfangsverteilt L-förmige Lagerabschnitte gebildet werden, deren Schenkel jeweils einer der Axiallagerabschnitte 8 und einen der Radiallagerabschnitte 7 ausbilden.

Im Scherspalt 4 sind zwischen dem Dämpfergehäuse 1 und dem Schwungring 3 Scherspalt-Axialbereiche 4c, 4d und Scherspalt-Radialbereiche 4a, 4b ausgebildet. Die Axiallagerabschnitte 8 liegen bei sämtlichen Ausgestaltungen in den Scherspalt-Axialbereichen 4c oder 4d und die Radiallagerabschnitte 7 in den Scherspalt-Radialbereichen 4a oder 4b. Als "radial" wird in der Technik der Drehschwingungsdämpfer und in dieser Anmeldung in den Figuren und der Beschreibung die Richtung einer nicht dargestellten Motorwelle bei konstantem Radius bezeichnet (die der Richtung der unteren strichpunktierten Linie in Fig. 1 entspricht), als "axial" die Richtung senkrecht dazu bei variablem Radius.

Die L-förmigen Lagerabschnitte 5 mit jeweils einem der Radiallagerabschnitte 7 und einem der Axiallagerabschnitte 8 erstrecken sich nicht über den gesamten Umfang des ringförmigen Lagerelements 5. Sie sind vielmehr nur abschnittsweise vorgesehen. Sie erstrecken sich aufsummiert in Umfangsrichtung vorzugsweise über weniger als 50 Prozent, vorzugsweise über weniger als 40 Prozent, insbesondere weniger als 30% des gesamten Umfangs des Lagerelements 5.

Benachbarte Radiallagerabschnitte 7 sind über Radialstege 9 in Umfangsrichtung miteinander verbunden.

Nach Fig. 2a ist das Lagerelement 5 nicht umfangsgeschlossen sondern an einer Stelle seines Umfangs offen ausgebildet/gefertigt. An dieser Stelle ist im montierten Zustand ein Spalt 11 ausgebildet. Dieser Spalt kann im montierten Zustand sehr klein sein und gegen Null gehen. Wenn das Band sehr dünn ist, ist theoretisch sogar ein Überlappen der Enden möglich (nicht dargestellt). Die Ausbildung als nicht umfangsgeschlossener Ring ermöglicht es, auf einfache Weise Toleranzen auszugleichen. Das Lagerelement 5 ist nicht als direkt als ein nicht umfangsgeschlossener Ring gefertigt worden, wie dies die EP 0 423 243 B1 vorschlägt. Denn auch dies würde erfordern, für verschiedene Radien jeweils eigene Fertigungswerkzeuge für die Lagerelemente bereitzustellen.

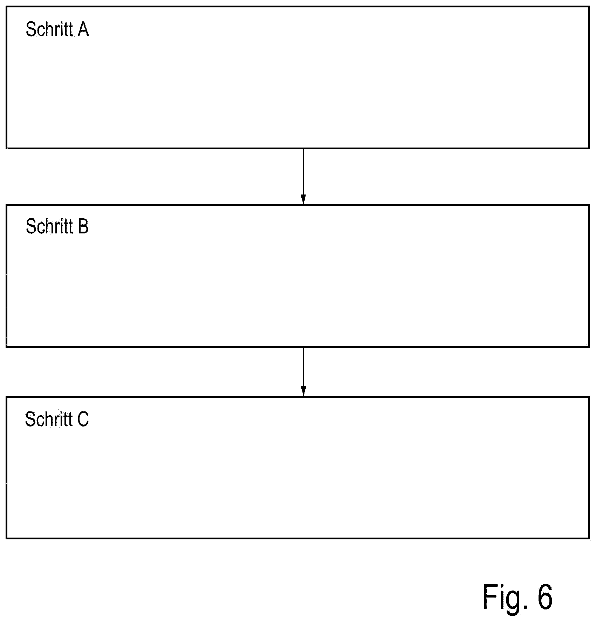

Die bevorzugte erfindungsmäße Art der Herstellung des Lagerelementes 5 vermeidet dies. Es werden - siehe hierzu auch Fig. 6 - vorzugsweise folgende Schritte durchgeführt:

### Schritt A):

In dem Schritt A) wird ein Band bereitgestellt, an dem zumindest eines oder beide der folgenden Merkmale vorhanden sind:
- einer der Axiallagerabschnitte 8 oder mehrere Axiallagerabschnitte 8 und/oder
- ein Radiallagerabschnitt 7 oder mehrere Radiallagerabschnitte 7.

Zudem sind an dem Band vorzugweise einer oder mehrere
- Axialstege; und/oder
- Radialstege 9
ausgebildet, welche ggf. die mehreren Axiallagerabschnitte 8 und/oder Radiallagerabschnitte 7 miteinander verbinden.

Das im Schritt a) bereitgestellte Band kann gerade sein oder leicht gebogen sein. Im letztgenannten Fall kann das Band wie eine Art "Endlosband" auf eine Trommel aufgewickelt sein, was die Handhabung nochmals vereinfacht. Der Radius der Biegung des bereitgestellten Bandes ist dabei größer als der des Lagersitzes.

### Schritt B):

Im Schritt b) wird aus dem bereitgestellten Band das Lagerelement 5 entsprechend dem jeweiligen Umfang eines Lagersitzes in einem Dämpfergehäuse 1 abgelängt. Nach Fig. 1 bilden Eckbereiche 12, 13 des Dämpfergehäuses 1 jeweils einen der Lagersitze aus.

### Schritt C):

Das wenigstens eine im Schritt b) abgelängte Lagerelement 5 wird in den Lagersitz des noch nicht von dem Deckel 1' verschlossenen Dämpfergehäuses 1 eingesetzt.

Dabei ist es vorteilhaft, das oder die Lagerelement(e) 5, 6 vor dem Schwungring 3 zu montieren.

Sodann wird zur Vervollständigung der Herstellung des Drehschwingungsdämpfers bereitgestellte Dämpfergehäuse 1 mit dem Deckel 1' verschlossen, wobei noch eine Einfüllöffnung für das viskose Medium verbleibt (nicht dargestellt). Danach wird das viskose Medium eingefüllt und die Einfüllöffnung des Dämpfergehäuses 1 geschlossen.

Insbesondere dann, wenn ein bezogen auf den Schwungring 3 axial außen liegendes Lagerelement 5, 6 realisiert werden soll, schmiegt sich das abgelängte Band aufgrund seiner Biegesteifigkeit beim Einsetzen in das Dämpfergehäuse 1 nach außen hin an das äußere Dämpfergehäuse 1 an, so dass sich der Schwungring 3 in einem Schritt d) auf einfache Weise im Dämpfergehäuse 1 platzieren lässt.

Es ist denkbar, aus einem einzigen Band mehrere der Lagerelemente 5, 6 des Viskositäts-Drehschwingungsdämpfers abzulängen. Es können aber auch Bänder verschiedener Bauart bereitgestellt werden, wenn sich die Lagerelemente 5, 6 nicht alle aus dem gleichen Band ablängen lassen.

Mit dem Bandmaterial bzw. Band lassen sich Lagerelemente für Lagersitze (vorzugsweise die Eckbereiche des Dämpfergehäuses 12, 13 und/oder des Schwungringes 3) verschiedenen Durchmessers realisieren. Dies spart Werkzeug- und Lagerkosten. Die Logistik bei der Herstellung wird ebenfalls vereinfacht, Zudem werden die Prototypenbauzeit verkürzt und Montagefehler vermieden.

Da sich die Lagerabschnitte 8, 9 sich nicht mehr fast über den gesamten Umfang des Lagerelements bzw. Lagerrings erstrecken, sondern nur noch winkelverteilt in Abschnitten vorgesehen sind, entstehen Bereiche, die zusätzlich von dem viskosen Medium ausgefüllt werden können, so dass zusätzliche Bereiche im Vergleich zum gattungsgemäßen Stand der Technik gebildet werden können, in denen eine viskose Ankopplung zwischen dem Schwungring 3 und dem Dämpfergehäuse 1 möglich ist. Dies ermöglicht es, den Scherspalt zu maximieren und die Ankopplung zwischen dem Schwungring 3 und dem Dämpfergehäuse 1 zu optimieren. Um die Bereiche, die zusätzlich von dem viskosen Medium ausgefüllt werden, groß zu gestalten, sollte die aufsummierte Umfangslänge der Axiallagerabschnitte 8 und/oder der Radiallagerabschnitte 7 vorzugsweise weniger als die genannten 50% des Umfangs, vorzugsweise über weniger als 40 Prozent, insbesondere weniger als 30% des Lagerelements und/oder des Schwungrings 3 betragen.

Vorzugsweise ist die Banddicke X1 und/oder Y1 der Axiallagerabschnitte 8 und/oder der Radiallagerabschnitte 7 größer als die Banddicke X2 und/oder Y2 im Bereich der die Lagerabschnitte verbindenden Axial- und Radialstege 9. Vorzugsweise ist zudem die axiale Breite der Axiallagerabschnitte 8 und/oder die radiale Breite der Radiallagerabschnitte 7 größer als in den Lagerabschnitten selbst. Auch dies bringt jeweils den Vorteil zusätzlichen Raums für viskoses Fluid zur Kopplung zwischen dem Schwungring 3 und dem Dämpfergehäuse 1 mit.

Die Lagerelemente 5,6 können in der Dämpferkammer 2 in die äußeren Eckbereiche 12, 13 zwischen dem Schwungring 3 und dem Dämpfergehäuse 1 gesetzt werden. Dazu weist der Schwungring 3 im Bereich der korrespondierenden Eckbereichen 12, 13 vorzugsweise sich jedenfalls radial oder über Eck radial und axial erstreckende Aussparungen 14, 15 auf, deren Bautiefe geringer ist als die der Banddicke der Lagerelemente 5, 6, was vorteilhaft ist, um den Scherspalt 4 schmal zu gestalten und um den Raum, den die Lagerelemente 5, 6 einnehmen gering zu halten sowie um geeignet bemessenen Raum für das viskose Fluid im Scherspalt 4 zu schaffen. Die Eckbereiche 12, 13, hier die Aussparungen 14, 15, bilden hier jeweils einen der Lagersitze aus.

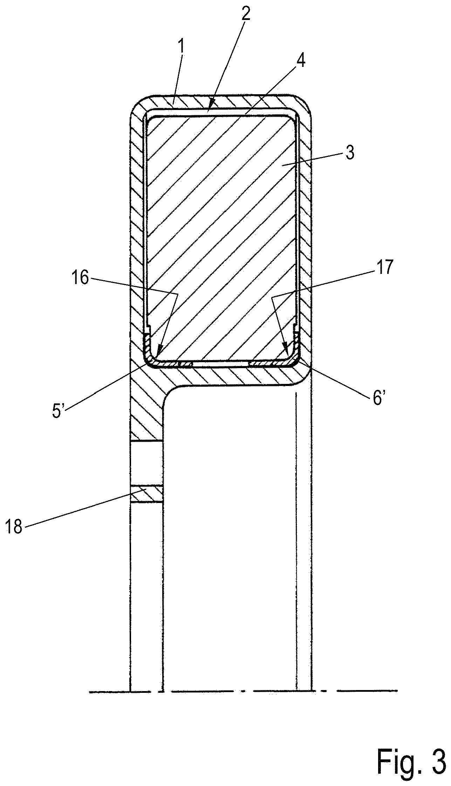

Fig. 3 zeigt eine alternative Variante eines Drehschwingungsdämpfers, bei dem die Lagerelemente 5', 6' derart ausgebildet sind, dass sie in radial innere Eckbereiche 16, 17 der Dämpferkammer 2 zwischen zwei dem Schwungring 3 und dem Dämpfergehäuse 1 eingesetzt werden. Auch diese Lagerelemente 5' und 6' sowie der Drehschwingungsdämpfer werden nach dem weiter oben beschriebenen Verfahren hergestellt. Die Eckbereiche 16, 17 bilden hier jeweils einen der Lagersitze für die Lagerelemente 5', 6' aus.

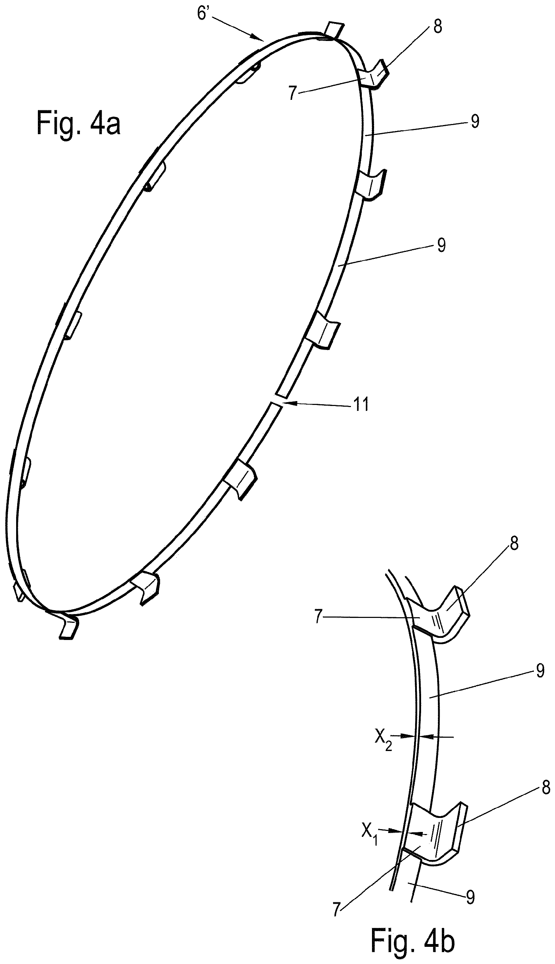

Ein für die Konstruktion der Fig. 3 geeignetes Lagerelement 6' zeigt Fig. 4. Veranschaulicht ist der montierte Zustand, obwohl das Dämpfergehäuse 1 hier nicht dargestellt ist. Das Lagerelement der Fig. 4 ist in diesem Zustand bereits in einen Viskositäts-Drehschwingungsdämpfer eingesetzt, wie er in Fig. 3 dargestellt ist. Ansonsten entspricht der Aufbau des Viskositäts-Drehschwingungsdämpfers der Fig. 3 dem der Fig. 1.

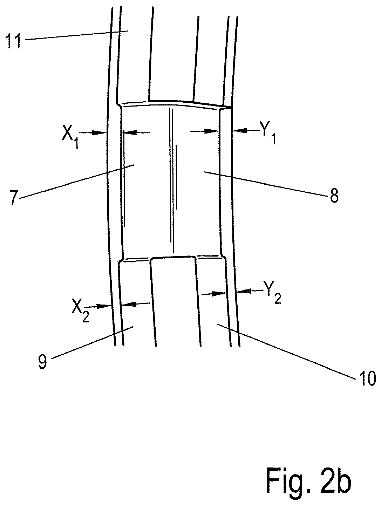

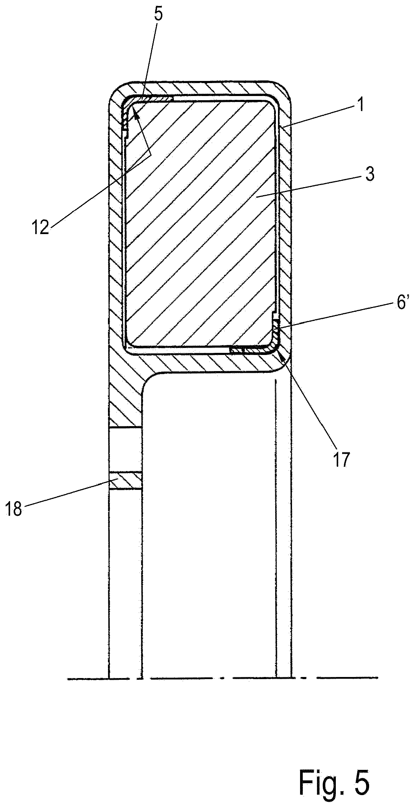

Fig. 5 zeigt eine weitere Variante, bei dem das eine Lagerelement 5 nach Art der Fig. 2 ausgebildet ist und in einen äußeren Eckbereich 11 der Dämpferkammer 2 eingesetzt ist, wohingegen das andere Lagerelement 6' nach Art der Fig. 4 ausgebildet ist, und in einen inneren Eckbereich 17 der Dämpferkammer 2 eingesetzt ist. Dabei liegen sich die Lagerelemente 5, 6 diagonal gegenüber, d.h. sie sind in diagonal gegenüberliegende der Eckbereiche 12, 17 der Dämpferkammer 2 eingesetzt. Die Eckbereiche 11 und 17 und/oder entsprechende Eckbereiche des Schwungringes 3 bilden hier jeweils die Lagersitze für die Lagerelemente 5, 6' aus.

Es ist vorteilhaft, die Axiallagerabschnitte 8 und die Radiallagerabschnitte 7 der Lagerelemente 5, 6 nicht jeweils durch Axialstege und Radialstege 9 miteinander zu verbinden, sondern nur Radialstege 9 vorzusehen. Derart lässt sich das aus dem bereitgestellten Band abgelängte Lagerelement besonders gut in eine Ringform mit dem erforderlichen Durchmesser biegen. Daher ist nach Fig. 2 und Fig. 4 jeweils vorgesehen, dass nur die Radiallagerabschnitte 7 durch Radialstege 9 miteinander verbunden sind.

Denkbar ist schließlich auch - nicht dargestellt - die Axiallagerabschnitte 8 und die Radiallagerabschnitte 7 nicht an gleichen Stellen des Umfangs vorzusehen, sondern umfangsversetzt zueinander. In diesem Fall würden beispielsweise an dem Lagerelement 5 der Fig. 2 in Abständen von 40° Axiallagerabschnitte 8 ausgebildet sein und winkelversetzt um 20° dazu jeweils Radiallagerabschnitte 7. Die Axial- und Radiallagerabschnitte 7, 8 weisen dabei dann wiederum eine größere Banddicke auf als die sie verbindenden Radialstege 9.

Das Dämpfergehäuse 1 weist nach Fig.1, 2 und 3 jeweils wenigstens einen Abschnitt zur Montage an der (nicht dargestellten) Maschinenwelle auf. Hier ist dieser Abschnitt jeweils ein Flansch 18, der sich radial nach innen erstreckt.

### Bezugszeichenliste

- 1: Dämpfergehäuse
- 1': Deckel
- 2: Dämpferkammer
- 3: Schwungring
- 4: Scherspalt
- 4a, b: Scherspalt-Radialbereiche
- 4c, 4d: Scherspalt-Axialbereiche
- 5, 5': Lagerelement
- 6, 6': Lagerelement
- 7: Radiallagerabschnitt
- 8: Axiallagerabschnitt
- 9: Radialsteg
- 11: Spalt
- 12: Eckbereich
- 13: Eckbereich
- 14: Aussparung
- 15: Aussparung
- 16: Eckbereich
- 17: Eckbereich
- 18: Flansch
- X1, Y1: Banddicke
- X2, Y2: Banddicke

## Patentansprüche

1. Viskositäts-Drehschwingungsdämpfer, der folgende Merkmale aufweist:
a) ein ringförmiges Dämpfergehäuse (1), das eine Dämpferkammer (2) begrenzt;
b) einen in der Dämpferkammer (2) angeordneter Schwungring (3);
c) eine den Schwungring (3) im Dämpfergehäuse lagernde Lagereinrichtung, die wenigstens eines oder mehrere Lagerelemente (5, 6; 5', 6') aufweist, wobei wenigstens eines der Lagerelemente (5, 6; 5', 6') als in einem montierten Zustand nicht umfangsgeschlossener Ring ausgebildet ist;
d) einen mit einem viskosen Fluid gefüllter Scherspalt (4) zwischen dem Schwungring (3) und dem Dämpfergehäuse (1),
e) umfangsverteilt an dem wenigstens einen als nicht umfangsgeschlossener Ring ausgebildeten Lagerelement (5, 6; 5', 6') mehrere Radiallagerabschnitte (7) vorgesehen sind, und
f) dass das wenigstens eine als nicht umfangsgeschlossener Ring ausgebildete Lagerelement (5, 6; 5', 6') aus einem Band abgelängt ist
**dadurch gekennzeichnet, dass**
g) umfangsverteilt an dem wenigstens einen als nicht umfangsgeschlossener Ring ausgebildeten Lagerelement (5, 6; 5', 6') ferner mehrere Axiallagerabschnitte (8) vorgesehen sind, und
h) wenigstens drei der Axiallagerabschnitte (8) und der Radiallagerabschnitte (7) umfangsverteilt an dem wenigstens einen Lagerelement (5, 6; 5', 6') vorgesehen sind,
i) das wenigstens eine als nicht umfangsgeschlossener Ring ausgebildete Lagerelement (5, 6; 5', 6') ferner mehrere Radialstege (9) aufweist, welche jeweils zwei der Radiallagerabschnitte (7) miteinander verbinden.

2. Viskositäts-Drehschwingungsdämpfer nach Anspruch 1, **dadurch gekennzeichnet, dass** das wenigstens eine als nicht umfangsgeschlossener Ring ausgebildete Lagerelement (5, 6; 5', 6') aus einem geraden Band abgelängt ist oder das wenigstens eine als nicht umfangsgeschlossener Ring ausgebildete Lagerelement (5, 6; 5', 6') aus einem gebogenen Band abgelängt ist.

3. Viskositäts-Drehschwingungsdämpfer nach einem der vorstehenden Ansprüche, **dadurch gekennzeichnet, dass** sich jeweils umfangsverteilt die Radiallagerabschnitte (7) und die Axiallagerabschnitte (8) zu im Querschnitt L-förmigen Lagerabschnitten ergänzen.

4. Viskositäts-Drehschwingungsdämpfer nach einem oder mehreren der vorstehenden Ansprüche, **dadurch gekennzeichnet, dass** eine Banddicke des Lagerelements (5, 6; 5', 6') im Bereich der Stege geringer ist als eine Banddicke (X2, Y2) in den Axiallagerabschnitten (8) und/oder in den Radiallagerabschnitten (7).

5. Viskositäts-Drehschwingungsdämpfer nach einem oder mehreren der vorstehenden Ansprüche, **dadurch gekennzeichnet, dass** zwei der Lagerelemente (5, 6; 5', 6') in der Dämpferkammer angeordnet sind.

6. Viskositäts-Drehschwingungsdämpfer nach einem oder mehreren der vorstehenden Ansprüche, **dadurch gekennzeichnet, dass** die Dämpferkammer einen im Wesentlichen rechteckigen Querschnitt mit inneren und äußeren Eckbereichen (12, 13, 16, 17) aufweist.

7. Viskositäts-Drehschwingungsdämpfer nach einem oder mehreren der vorstehenden Ansprüche, **dadurch gekennzeichnet, dass** zwei der Lagerelemente (5, 6; 5', 6') in den äußeren als Lagersitz dienenden Eckbereichen (12, 13) der Dämpferkammer (2) zwischen dem Dämpfergehäuse (1) und dem Schwungring (3) angeordnet sind.

8. Viskositäts-Drehschwingungsdämpfer nach einem oder mehreren der vorstehenden Ansprüche, **dadurch gekennzeichnet, dass** zwei der Lagerelemente (5', 6') in den inneren als Lagersitz dienenden Eckbereichen (16, 17) der Dämpferkammer (2) zwischen dem Dämpfergehäuse (1) und dem Schwungring (3) angeordnet sind.

9. Viskositäts-Drehschwingungsdämpfer nach einem oder mehreren der vorstehenden Ansprüche, **dadurch gekennzeichnet, dass** eines der Lagerelemente (5') in einem als Lagersitz dienenden äußeren Eckbereich (12) angeordnet ist und dass ein weiteres der Lagerelemente (6') in einem als Lagersitz dienenden inneren Eckbereich der Dämpferkammer (2) zwischen dem Dämpfergehäuse (1) und dem Schwungring (3) angeordnet ist.

10. Viskositäts-Drehschwingungsdämpfer nach Anspruch 9, **dadurch gekennzeichnet, dass** die Lagerelemente (5, 6; 5', 6') in diagonal einander in der Dämpferkammer (2) gegenüberliegenden und als Lagersitz dienenden Eckbereichen angeordnet sind.

11. Viskositäts-Drehschwingungsdämpfer nach einem oder mehreren der vorstehenden Ansprüche, **dadurch gekennzeichnet, dass** die Lagerelemente ohne Vorspannung zwischen dem Dämpfergehäuse (1) und dem Schwungring (3) angeordnet sind.

12. Viskositäts-Drehschwingungsdämpfer nach einem der vorstehenden Ansprüche, **dadurch gekennzeichnet, dass** eines der Lagerelemente (5, 6; 5', 6') lediglich Radiallagerabschnitte (7) und lediglich diese verbindende Radialstege (9) aufweist.

13. Viskositäts-Drehschwingungsdämpfer nach einem der vorstehenden Ansprüche, **dadurch gekennzeichnet, dass** die Lagerelemente (5, 6) aus Kunststoff bestehen.

14. Viskositäts-Drehschwingungsdämpfer nach einem der vorstehenden Ansprüche, **dadurch gekennzeichnet, dass** die Lagerelemente (5, 6) einstückig ausgebildet sind.

15. Viskositäts-Drehschwingungsdämpfer nach einem der vorstehenden Ansprüche, **dadurch gekennzeichnet, dass** wenigstens drei der Axiallagerabschnitte (8) und/oder der Radiallagerabschnitte (7) umfangsverteilt an dem einen oder den zwei oder mehr Lagerelementen (5, 6; 5', 6') vorgesehen sind.

## Claims

1. A viscosity-type torsional vibration damper having the following features:
a) an annular damper housing (1) that delimits a damper chamber (2),
b) an inertia ring (3) arranged in the damper chamber (2),
c) a bearing device that holds the inertia ring (3) in the damper housing and has at least one or more bearing elements (5, 6; 5', 6'), at least one of these bearing elements (5, 6; 5', 6') taking the form of a ring that is not circumferentially closed when fitted,
d) a shearing gap (4) filled with a viscous fluid between the inertia ring (3) and the damper housing (1),
e) the provision of a plurality of radial bearing portions (7) distributed circumferentially on the at least one bearing element (5, 6; 5', 6') that takes the form of a ring that is not circumferentially closed,
f) the at least one bearing element (5, 6; 5', 6') that takes the form of a ring that is not circumferentially closed is cut to length from a strip,
**characterised in that**
g) there is also provided a plurality of axial bearing portions (8) distributed circumferentially on the at least one bearing element (5, 6; 5', 6') that takes the form of a ring that is not circumferentially closed, and
h) at least three of the axial bearing portions (8) and of the radial bearing portions (7) are distributed circumferentially on the at least one bearing element (5, 6; 5', 6'),
i) the at least one bearing element (5, 6; 5', 6') that takes the form of a ring that is not circumferentially closed also has a plurality of radial webs (9) that each connect two of the radial bearing portions (7).

2. A viscosity-type torsional vibration damper according to claim 1, **characterised in that** the at least one bearing element (5, 6; 5', 6') that takes the form of a ring that is not circumferentially closed is cut to length from a straight strip or that the at least one bearing element (5, 6; 5', 6') that takes the form of a ring that is not circumferentially closed is cut to length from a bent strip.

3. A viscosity-type torsional vibration damper according to either of the preceding claims, **characterised in that** distributed circumferentially the radial bearing portions (7) and the axial bearing portions (8) supplement one another to form bearing portions with an L-shaped cross section.

4. A viscosity-type torsional vibration damper according to one or more of the preceding claims, **characterised in that** a strip thickness of the bearing element (5, 6; 5', 6') in the region of the webs is less than a band thickness (X2, Y2) in the axial bearing portions (8) and/or in the radial bearing portions (7).

5. A viscosity-type torsional vibration damper according to one or more of the preceding claims, **characterised in that** two of the bearing elements (5, 6; 5', 6') are arranged in the damper chamber.

6. A viscosity-type torsional vibration damper according to one or more of the preceding claims, **characterised in that** the damper chamber has a substantially rectangular cross section with inner and outer corner regions (12, 13, 16, 17).

7. A viscosity-type torsional vibration damper according to one or more of the preceding claims, **characterised in that** two of the bearing elements (5, 6; 5', 6') are arranged in the outer corner regions (12, 13) of the damper chamber (2) between the damper housing (1) and the inertia ring (3), these outer corner regions (12, 13) serving as bearing seats,.

8. A viscosity-type torsional vibration damper according to one or more of the preceding claims, **characterised in that** two of the bearing elements (5', 6') are arranged in the inner corner regions (16, 17) of the damper chamber (2) between the damper housing (1) and the inertia ring (3), these inner corner regions (12, 13) serving as bearing seats.

9. A viscosity-type torsional vibration damper according to one or more of the preceding claims, **characterised in that** one of the bearing elements (5') is arranged in an outer corner region (12) that serves as a bearing seat, and that another of the bearing elements (6') is arranged in an inner corner region of the damper chamber (2) between the damper housing (1) and the inertia ring (3), this corner region serving as a bearing seat.

10. A viscosity-type torsional vibration damper according to claim 9, **characterised in that** the bearing elements (5, 6; 5', 6') are arranged in corner regions located diagonally opposite one another in the damper chamber (2) and serve as bearing seats.

11. A viscosity-type torsional vibration damper according to one or more of the preceding claims, **characterised in that** the bearing elements are arranged between the damper housing (1) and the inertia ring (3) with no preloading.

12. A viscosity-type torsional vibration damper according to any one of the preceding claims, **characterised in that** one of the bearing elements (5, 6; 5', 6') comprises only radial bearing portions (7) and radial webs (9) connecting them.

13. A viscosity-type torsional vibration damper according to any one of the preceding claims, **characterised in that** the bearing elements (5, 6) are made of plastic.

14. A viscosity-type torsional vibration damper according to any one of the preceding claims, **characterised in that** the bearing elements (5, 6) are formed in one piece.

15. A viscosity-type torsional vibration damper according to any one of the preceding claims, **characterised in that** at least three of the axial bearing portions (8) and/or of the radial bearing portions (7) are distributed circumferentially on the one or the two or more bearing elements (5, 6; 5', 6').

## Revendications

1. Amortisseur de vibrations de torsion par viscosité, qui a les caractéristiques suivantes :
a) un boîtier (1) annulaire d'amortisseur, qui délimite une chambre (2) d'amortisseur ;
b) un anneau (3) oscillant, disposé dans la chambre (2) d'amortisseur ;
c) un dispositif de palier, qui supporte l'anneau (3) oscillant dans le boîtier de l'amortisseur et qui a au moins un ou plusieurs éléments (5, 6 ; 5', 6') de palier, au moins l'un des éléments (5, 6 ; 5', 6') de palier étant constitué sous la forme d'un anneau non fermé sur le pourtour à l'état monté ;
d) une fente (4) de cisaillement emplie d'un fluide visqueux entre l'anneau (3) oscillant et le boîtier (1) de l'amortisseur,
e) plusieurs parties (7) de palier radiales sont prévues, en étant réparties sur le pourtour, sur le au moins un élément (5, 6 ; 5', 6') de palier constitué en anneau non fermé sur le pourtour, et
f) en ce que le au moins un élément (5, 6 ; 5', 6') de palier constitué en anneau non fermé sur le pourtour est tronçonné dans une bande,
**caractérisé en ce que**
g) plusieurs parties (8) de palier axiales sont prévues, en outre, en étant réparties sur le pourtour, sur le au moins un élément (5, 6 ; 5', 6') constitué en anneau non fermé sur le pourtour, et
h) au moins trois des parties (8) de palier axiales et des parties (7) de palier radiales sont prévues, réparties sur le pourtour, sur le au moins un élément (5, 6 ; 5', 6') de palier,
i) le au moins un élément (5, 6 ; 5', 6') de palier constitué en anneau non fermé sur le pourtour a, en outre, plusieurs entretoises (9) radiales, qui relient entre elles, respectivement, deux des parties (7) de palier radiales.

2. Amortisseur de vibrations de torsion par viscosité suivant la revendication 1, **caractérisé en ce que** le au moins un élément (5, 6 ; 5', 6') de palier constitué en anneau non fermé sur le pourtour est tronçonné dans une bande rectiligne ou **en ce que** le au moins un élément (5, 6 ; 5', 6') de palier constitué en anneau non fermé sur le pourtour est tronçonné dans une bande incurvée.

3. Amortisseur de vibrations de torsion par viscosité suivant l'une des revendications précédentes, **caractérisé en ce que**, respectivement réparties sur le pourtour, les parties (7) de palier radiales et les parties (8) de palier axiales se complètent en des parties de palier en forme de L en section transversale.

4. Amortisseur de vibrations de torsion par viscosité suivant l'une ou plusieurs des revendications précédentes, **caractérisé en ce qu'**une épaisseur de bande de l'élément (5, 6 ; 5', 6') de palier, dans la région des entretoises, est plus petite qu'une épaisseur (X2, Y2) de bande dans les parties (8) de palier axiales et/ou dans les parties (7) de palier radiales.

5. Amortisseur de vibrations de torsion par viscosité suivant l'une ou plusieurs des revendications précédentes, **caractérisé en ce que** deux des éléments (5, 6 ; 5', 6') de palier sont disposés dans la chambre de l'amortisseur.

6. Amortisseur de vibrations de torsion par viscosité suivant l'une ou plusieurs des revendications précédentes, **caractérisé en ce que** la chambre de l'amortisseur a une section transversale sensiblement rectangulaire ayant des parties (12, 13, 16, 17) de sommet intérieures et extérieures.

7. Amortisseur de vibrations de torsion par viscosité suivant l'une ou plusieurs des revendications précédentes, **caractérisé en ce que** deux des éléments (5, 6 ; 5', 6') de palier, dans les parties (12, 13) de sommet extérieures servant de siège de palier de la chambre (2) de l'amortisseur, sont disposés entre le boîtier (1) de l'amortisseur et l'anneau (3) oscillant.

8. Amortisseur de vibrations de torsion par viscosité suivant l'une ou plusieurs des revendications précédentes, **caractérisé en ce que** deux des éléments (5', 6') de palier, dans les parties (16, 17) de sommet intérieures servant de siège de palier de la chambre (2) de l'amortisseur, sont disposés entre le boîtier (1) de l'amortisseur et l'anneau (3) oscillant.

9. Amortisseur de vibrations de torsion par viscosité suivant l'une ou plusieurs des revendications précédentes, **caractérisé en ce que** l'un des éléments (5') de palier est disposé dans une partie (12) de sommet extérieure servant de siège de palier et **en ce qu'**un autre des éléments (6') de palier est disposé dans une partie de sommet intérieure servant de siège de palier de la chambre (2) de l'amortisseur entre le boîtier (1) de l'amortisseur et l'anneau (3) oscillant.

10. Amortisseur de vibrations de torsion par viscosité suivant la revendication 9, **caractérisé en ce que** les éléments (5, 6 ; 5', 6') de palier sont disposés en s'opposant en diagonale l'un à l'autre dans la chambre (2) de l'amortisseur et dans des parties de sommet servant de siège de palier.

11. Amortisseur de vibrations de torsion par viscosité suivant l'une ou plusieurs des revendications précédentes, **caractérisé en ce que** les éléments de palier sont disposés, sans précontrainte, entre le boîter (1) de l'amortisseur et l'anneau (3) oscillant.

12. Amortisseur de vibrations de torsion par viscosité suivant l'une des revendications précédentes, **caractérisé en ce que** l'un des éléments (5, 6 ; 5', 6') de palier a seulement des parties (7) de palier radiales et seulement des entretoises (9) radiales reliant celles-ci.

13. Amortisseur de vibrations de torsion par viscosité suivant l'une des revendications précédentes, **caractérisé en ce que** les éléments (5, 6) de palier sont en une matière plastique.

14. Amortisseur de vibrations de torsion par viscosité suivant l'une des revendications précédentes, **caractérisé en ce que** les éléments (5, 6) de palier sont constitués d'une seule pièce.

15. Amortisseur de vibrations de torsion par viscosité suivant l'une des revendications précédentes, **caractérisé en ce qu'**au moins trois des parties (8) de palier axiales et/ou des parties (7) de palier radiales sont prévues, en étant réparties sur le pourtour, sur le un ou sur les deux ou plusieurs éléments (5, 6 ; 5', 6') de palier.
